# EUROPEAN PATENT SPECIFICATION

(11) **EP 2 493 147 B1**
(45) Date of publication and mention of the grant of the patent: **21.05.2014**
(21) Application number: 11155593.4
(22) Date of filing: 23.02.2011
(51) Int. Cl.: H04L 29/08, H04L 12/28, H04L 29/12

(54) **Control system and pairing method for a control system**
Steuersystem und Paarungsverfahren für ein Steuersystem
Système de contrôle et procédé d'appariement pour système de contrôle

(43) Date of publication of application: 29.08.2012
(73) Proprietor: Zerogroup Holding OÜ, 51003 Tartu (EE)
(72) Inventor: Vimberg, Priit, 10915, Tallinn (EE)
(74) Representative: Kupiainen, Juhani Kalervo

(56) References cited:
- EP-A2- 1 128 635
- EP-A2- 1 294 159
- US-A1- 2007 248 232
- US-A1- 2008 298 302
- US-A1- 2010 034 119

## Description

### TECHNICAL FIELD OF THE INVENTION

The present invention relates to a control system and a pairing method for installation, configuration and update of a control system. The invention is applicable to e.g. control systems for controlling environmental conditions of different entities, such as apartments and offices. The environmental conditions may relate to temperature, humidity, CO₂ level, electricity, access, water supply, and lighting, for example. The invention is also applicable for controlling other electrical equipment such as domestic appliances and multimedia equipment.

### BACKGROUND OF THE INVENTION

In order to save energy and to improve living environment in buildings, there are control systems for adjusting heating, air conditioning, and lighting, for example. Simple systems may include a heater, a sensor, and an adjustment panel for adjusting the desired temperature. More facilitated systems may include several sensors, actuators and control panels. There are also separate security systems available for buildings. However, the more complicated the system is, the more difficult and costly it generally is to install such a system, and make upgrades and changes in the system.

Therefore, there is a tendency of increasing the use of centralized control systems in home and office environments, for example. Centralized control systems are used for achieving optimal use of energy and optimal environmental conditions for inhabitants and workers. The amount of other electronic equipment is also increasing in homes and offices, whereby a centralized control system also makes the use of the various electronic equipment easier.

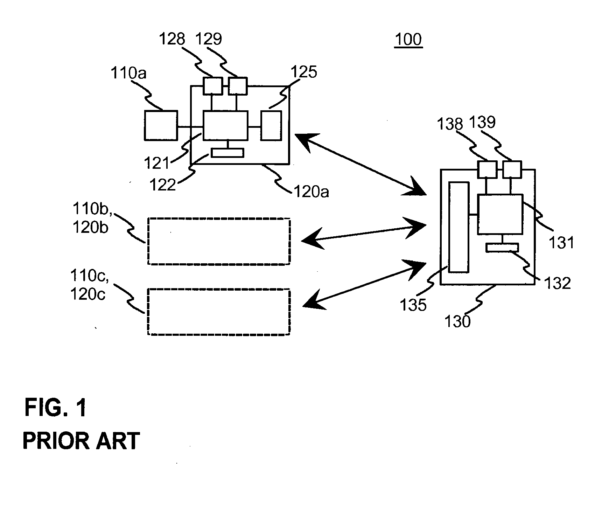

Figure 1 illustrates a block diagram of a prior art control system. The control system 100 has a control device 130, which has a communication connection to nodes 120a, 120b, 120c over a wired or wireless network. The nodes are further connected to control elements 110a, 110b, 110c, which may be sensors or actuators, for example. The control device acquires measurement data from the sensors via the nodes, and gives instructions to the nodes for controlling the actuators.

The control device has a processor 131 for implementing the control functions defined by a program and parameters stored in a memory 132. The control device has a transceiver 135 for communicating with nodes, which have a corresponding transceiver 125. The nodes have a microcontroller 121 with a memory 122. The microcontroller controls the data transfer with the control device and handles data input from the sensor or data output to an actuator.

When a control system is installed the nodes must be paired with the control device. This means that identification data of nodes which are under the control of the control device i.e. "assigned" to the control device, is stored in the control device in order to facilitate the communication and controlling functions with the assigned nodes. Both the nodes and the control device have switches 125 and 135 respectively for turning the units into a pairing mode. After activating the pairing mode in one node and a control device they exchange ID information through the network in order to be able to address each other in the control system. This pairing must be provided between each node and the control device. If configuration of the control system needs to be changed later, the existing pairing can be released with switches 129 and 139 of a node and the control device, respectively.

There are certain disadvantages related to the prior art control systems. Firstly, in a prior art system manual activation of the pairing process is required, which may be difficult for many users. It is often necessary to install new control elements into an already functional control system, whereby such a manual pairing process is always necessary in such situations. Often it is also required to change the pairing configuration in such a way that the old configuration must first be released. It is also possible that the pairing is occasionally released due to various other reasons. After this, all nodes need to be paired to related control device, and this tends to take much time. In many systems it is also required to connect a computer in the system for the configuration. And as a further problem, sometimes the pairing process may fail. This may due to pairing of two nodes simultaneously in the network. This may often happen if the same network is used by nodes of different users, such as nodes of different apartments.

Document US 2008/298302 A1 discloses a method for establishing a communication path in a control system. A sensor device forms a candidate list of nodes which have responded to its initial request. The candidate list is transferred to a managing server which selects the communication path based on the list. The selected communication path is informed to the selected node and the sensor device. The communication is secured by using building ID, room ID and ID of individual devices in forming a communication key.

Document US 2010/034119 A1 discloses a method for providing logical addresses that includes a device type, a device owner, device function, device feature and a device location.

Document EP 1 128 635 A2 discloses a method for providing names for devices in a control system in order to facilitate communication. The names are formed according to certain rules, without a need for central authority for providing the names.

In the methods disclosed in these documents the configuration of elements is made autonomously and the configuration is initiated by a request from a new element of a system.

### SUMMARY OF THE INVENTION

An object of the invention is to alleviate the problems and disadvantages relating to the known prior art solutions. Especially it is the object to provide a control system and a pairing method which is easy to install, configure and update.

At least a part of the objects of the invention is achieved by the present inventive solution, wherein the control system comprises nodes with control elements, one or several hubs, and a server. Identification data of assigned nodes is transferred from the server to a hub. The hub provides a pairing process with nodes that have any of the IDs stored in the hub as assigned nodes. This way an automatic pairing process is achieved which does not require manual activation procedures of a user.

Control system according to the invention is characterised by claim 1.

Node according to the invention for a control system is characterised by claim 10.

Hub for a control system according to the invention, is characterised by claim 12.

Pairing method for a control system according to the invention is characterised by claim 14.

Some preferable embodiments are described in dependent claims.

According to one embodiment there is a wireless network for the communication between the nodes and the hub(s). When wireless network is used it is possible to install the nodes of the system without a need for network cabling between the nodes and the hub(s). The wireless communication may be according to Zigbee or some other suitable communication procedure.

According to another embodiment of the invention there is a wired network, such as RS485, for the communication between the nodes and the hub(s). When a wired network is used it is possible to install several control systems without a risk of interference between the communications of nearby control systems.

In one embodiment of the invention, if a node is not paired with any hub the node is programmed to transmit request messages to hubs through the network. Such a request may include the ID of the node. The hubs which are connected to the network will then check whether a node with the ID is assigned to the hub. If the node is assigned to the hub the hub will start a pairing process with the node.

It is also possible that, if a node is assigned to a hub but the node is not yet paired with the hub, the hub transmits requests which may include the ID of the assigned node. When the assigned node is connected to the network the node will send a response and a pairing process is started.

According to one embodiment of the invention a hub receives from the server a security certificate of a node which is assigned to the hub. This security certificate is then used in the pairing process between the hub and the assigned node in order to verify that the node is assigned to the concerned hub. The security certificate is thus verified by the node. It is also possible that the hub verifies a security certificate of a node.

When additional nodes are acquired for a control system the ID of the new node is input to the server, which further transmits the assignment information to the concerned hub. When additional hubs are acquired to the control system the IDs of the hub and its assigned nodes are also stored in the server for subsequent pairing process.

According to one embodiment of the invention the pairing between a node and a hub can be released by cancelling the assignment at the server, whereby the server informs the cancellation to the hub, and the hub will start the pairing cancellation with the previously assigned node(s).

The server of the control system can be installed in the same premises as the hubs and nodes of the control system. In this case the there may be a wired or wireless communication connection between the server and the hubs. According to a preferable embodiment of the invention the server is located in other facilities than the other parts of the control system. The server can be operated by a third party, which may take care of the administration of several control systems which may be connected to a same server. A third party may be e.g. a house managing agency, a control system / communications operator, or a guarding agency. When the server is located in other facilities the communication between the server and the hubs may be implemented via Internet, for example.

The server has a program for administrating the configuration and functionality of the control system. The control system can be configured with a terminal connected to the server, or through a communication network, such as the Internet. It is possible that stores/companies which sell hardware for control systems have an ability to send information regarding the new nodes and hubs to the server of the control systems. If the seller has access to the server the seller is able to configure the system for new nodes/hubs when they are bought. This facilitates an automatic installation after the user connects the nodes/hubs to the system. It is also preferable that the user has an access to the server for possible configuration changes.

The present invention has important advantages over the prior art solutions. Firstly, it is not necessary for the user to activate the pairing process manually. The pairing can be made automatically after the nodes and hubs are installed and connected to the networks. It is also possible to add new nodes and hubs using automatic pairing process. It is even possible to use automatic process for resetting old pairing configuration partly or completely and installing a new pairing configuration. The user does not need to make manual activation/resetting or connect a computer to nodes or hubs for configuration.

In the inventive control system there is no risk that simultaneous pairing processes would cause pairing failures because each pairing is based on identification data of the assigned hubs and nodes.

The exemplary embodiments of the invention presented in this document are not to be interpreted to pose limitations to the applicability of the appended claims. The verb "to comprise" is used in this document as an open limitation that does not exclude the existence of also unrecited features. The features recited in depending claims are mutually freely combinable unless otherwise explicitly stated.

The entities where the invention can be used may be e.g. private houses, office buildings, factories, warehouses, schools, hospitals, museums etc.

Term "node" is used in this patent application to mean any unit of a control system which has an integrated control element or an interface for a control element, and has also a transceiver for a wireless or wired network/bus for digital control.

Term "hub" is used in this patent application to mean any unit of a control system which has a transceiver for communication with a node through a wireless or wired network, and also has an interface for communication with a server. A hub may also be a gateway.

Term "control element" is used in this patent application to mean any element which provides conversion between physical quantity and electric signal. Thus the control element can be a sensor, an actuator, a control panel, a card reader etc.

### BRIEF DESCRIPTION OF THE DRAWINGS

Next the invention will be described in greater detail with reference to exemplary embodiments in accordance with the accompanying drawings, in which:
- Figure 1: illustrates a block diagram of a prior art control system;
- Figure 2: illustrates a block diagram of an exemplary control system according to the invention; and
- Figure 3: illustrates a flow diagram of an exemplary pairing method according to the invention.

### DETAILED DESCRIPTION

Figure 1 was described in the prior art description above. Next the invention is presented by first describing an exemplary control system according to the invention, and then an exemplary pairing method for a control system is described.

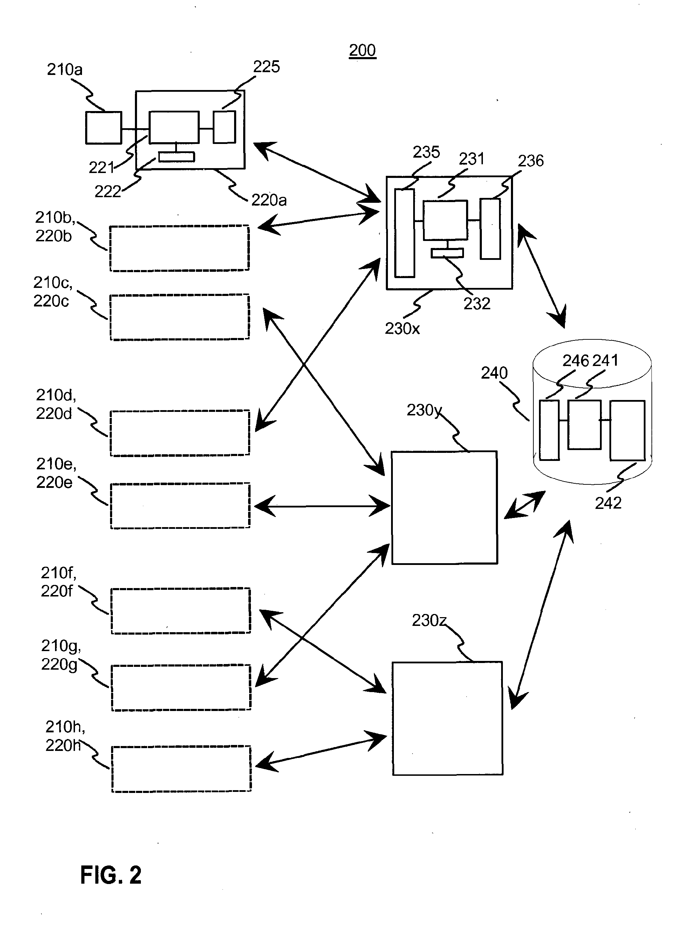

Figure 2 illustrates a block diagram of an exemplary control system according to the invention. The control system 200 has three hubs 230x, 230y and 230z. These hubs may be installed in different floors of a building, for example. The hubs have a processor 231 with a memory 232. The hubs are in communication with nodes 220a-220h through a wireless or wired network. The hubs have a transceiver 235 for the communication in the network. The hubs may also communicate with each other via the network. For example, in case of a fire within the control area of a first hub, this information can be transferred to other hubs of the building for the purpose of providing alarm.

The nodes have a transceiver 225 for communication with the hubs. It is also possible that nodes communicate with each other through the network. The nodes have a microcontroller 221 with a memory 222. The microcontroller controls the data transfer with the hub and handles data input/output to/from control elements. The nodes 220a-220h are connected to respective control elements 210a-210h, which may be sensors, actuators, control panels, card readers etc.

Each node is paired with one of the hubs. In the example of Figure 2, nodes 220a, 220b, 220d are assigned to hub 230x, nodes 220c, 220e, 220g are assigned to hub 230y, and nodes 220f, 220h are assigned to hub 230z. The hubs acquire measurement data from the sensors via the nodes, and give instructions to the nodes for controlling the actuators. The control element of a node may also be a control panel or some other user interface equipment, whereby the input/output information is transferred between the concerned node and hub.

The sensors coupled to nodes as control elements may include e.g. light sensors, temperature sensors, humidity sensors, CO₂ sensors, energy meters, door sensors, movement sensors, cameras or some other presence sensors. The actuators coupled to the nodes may include e.g. heating means, cooling means, ventilation means, lighting means, means for affecting humidity, a sprinkler system, an electronic lock, and a buzzer. The nodes may also be adapted to gather measuring information from these equipments, whereby such information may indicate for example current operating status of the equipment. The control elements may further comprise security elements, such as a key reader, a card reader, some other type of ID reader, or other access control elements. The control elements may as well include various electronics equipment, such as multimedia equipment, intercom, washing machine, kitchen equipment etc., wherein the control system may both control the equipment and receive data from them. A control panel connected to a node may include a touch screen display, for example.

The hubs have data interfaces 236 for communication with a server 240, which has a corresponding interface 246 for communication with hubs. A hub may initiate a connection with the server after powering it up. A unique ID and security certificate may be checked by the server during the connection set-up, and the hub may also check the server's security certificate. If the unique ID and certificates match, a secure communication channel is established. The communication between the hub and the server is advantageously encrypted and therefore the public Internet can be used for data transmission, which is preferable if the server is at a distance from the hubs. Each hub has a unique ID and advantageously also a security certificate.

The server 240 has a processor 241 and data storage 242, such as a database. The storage of the server includes information on the configuration of the control system, including lists of nodes assigned to each hub. The configuration/lists can be created and updated by an operator or the user of the control system. It is also possible that sellers of control devices are authorised to transfer information on new devices of the control system to the server.

After creating the connection between the server and the hubs, the server will transfer the lists of assigned nodes to each hub. The server storage may also include control parameters which are transferred to the hubs, and which may further be transferred by the hubs to the assigned nodes.

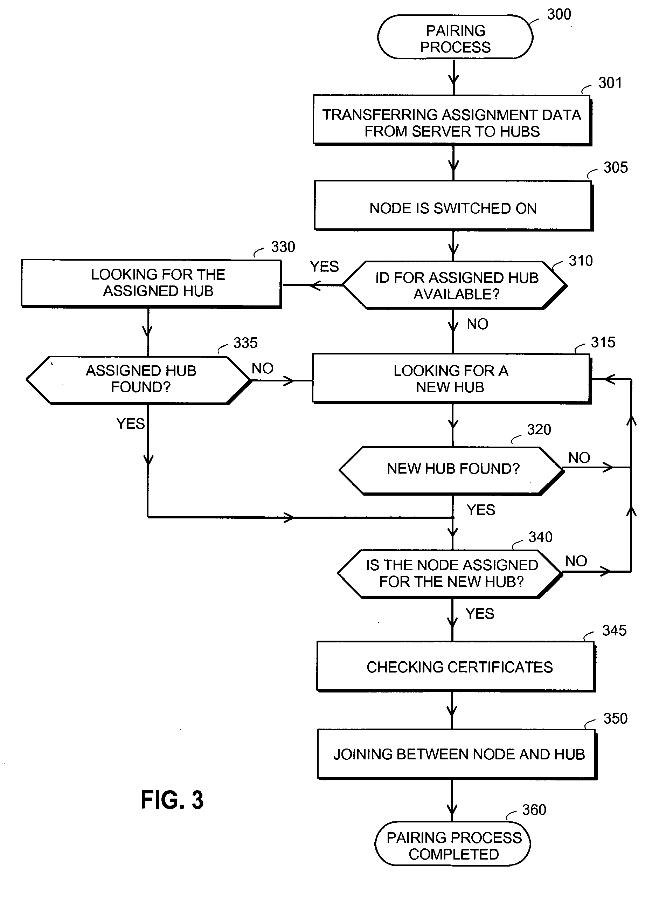

Figure 3 illustrates a flow diagram of an exemplary pairing method 300 according to the invention. This embodiment of an automatic pairing method can be used when a new control system is installed, when a new node or hub is installed into an existing system, or when the old configuration of an existing control system installation has been released.

First, the server of the control system transfers information to the hubs of the system, the information including lists of the nodes assigned to each hub. In phase 305 a node to be paired is switched on. This node has been previously put into its proper physical location in the control system. It is possible that the node has already been paired earlier in the control system, and therefore it is first checked by the node whether there is identification data of a previously assigned hub stored in the memory of the node, phase 310. If data of a previously assigned hub is available, the node will start requesting the previously assigned hub via the network, 330. If the previously assigned hub is found, 335, it is then checked whether the node is still assigned for the hub, 340.

If in phase 310 it appears that there is no information available of a previously assigned hub, or if a previously assigned hub is not found in phase 335, the node will start looking for a new hub with request messages, 315. Sending these requests will continue periodically until a new hub is found in phase 320.

When a new hub is found it is checked whether the node is assigned for the found hub, phase 340. If the node is not assigned for the found hub, a further hub will be looked for, phase 315. If the node is assigned to the found hub in phase 340, the node will check the security certificate of the hub and/or the hub will check the security certificate of the node, phase 345. If the certificates are accepted the node and the hub will be joined as a pair, phase 350, which facilitates them to transfer control data with each other and allows the hub to give instructions for the node. The pairing process is thus completed, 360. If the certificate of the node/hub is not accepted in phase 345, the joining is not performed, and the failure is informed to the server (not shown in Figure).

The method of Figure 3 has separate phases for searching a hub and for checking whether the node is assigned to a found hub. Alternatively, it is also possible that the node sends its ID in the search request, and the found hub will check whether the node is assigned to the hub and inform this to the node in its initial response message. It is also possible that the hub will send a response message only if the node is assigned to the hub.

It is also possible that a hub will search for assigned nodes. When the hub receives a new list of assigned nodes from the server the hub may check whether there are assigned nodes in the list which are not paired. The hub may the search for the assigned nodes that are not paired by sending periodical requests through the network until the assigned nodes are found. The found, assigned nodes are then joined as described above.

In this patent specification the structure of the various components of the system and devices is not described in more detail as they can be implemented using the description above and the general knowledge of a person skilled in the art.

It should be noted that the functioning of the control system; nodes, hubs and a server, require suitable computer program products, which are run in a device. The control of functions in the devices generally takes place in an arrangement of processing capacity in the form of microprocessor(s) and memory in the form of memory circuits. To convert a known device or system into equipment according to the invention it is necessary, in addition to the hardware modifications, to store into the memory means a set of machine-readable instructions that instruct the microprocessor(s) to perform the operations described above. Composing and storing into memory of such instructions involves known technology which, when combined with the teachings of this patent application, is within the capabilities of a person skilled in the art.

The scope of the patent will be defined by the appended claims. Skilled persons will appreciate the fact that various changes and modifications may be made to the explicitly disclosed embodiments and features thereof without diverging from the scope as set forth in the claims.

The invention is especially well applicable to control systems which control environmental conditions inside buildings. However, the invention can be well applied in any centrally controlled system.

## Claims

1. Control system comprising at least one node (220a-220h) with an interface to a control element (210a-210h), a microcontroller (221), storage (222) for storing an ID of the node, and a transceiver (225) for communicating with a hub, at least one hub (230x-230z) with an interface (236) to a server, a processor (231), a storage (232) for storing ID data of a node, and a transceiver (235) for communicating with a node, wherein a hub and a node which are assigned and paired to each other, are arranged to transfer control data with each other, wherein the control system comprises a server (240), and the server is arranged to transfer to a hub (230x) identification data of those nodes (220a, 220b, 220d) which are assigned to the hub, and a hub is arranged to exchange identification data with an assigned node in order to join the hub and the node in the control system, **characterized in that** the exchange of the identification data is based on a request of the hub or the assigned node, the initial request being made after said assignment.

2. Control system according to claim 1, **characterized in that** the server is arranged to transmit to a hub security certificates of nodes which are assigned to the hub, and the hub is arranged to transmit the security certificate of an assigned node to the assigned node for verification in the pairing process.

3. Control system according to claim 1 or 2, **characterized in that** the transceivers of the node and the hub have means for wireless data transfer between the node and the hub.

4. Control system according to any previous claim, **characterized in that** the transceivers of the node and the hub have means for wired data transfer between the node and the hub.

5. Control system according to claim 4, **characterized in that** the transceivers of the node and the hub have interfaces for a wired network, such as an RS485 network.

6. Control system according to any previous claim, **characterized in that** the hub and the server have means (236, 246) for mutual communication via the Internet.

7. Control system according to any previous claim, **characterized in that** the control element (210a-210h) is a sensor, such as a temperature sensor, a humidity sensor, an optical sensor, a CO₂ sensor, a motion sensor, another type of presence sensor, or a camera.

8. Control system according to any previous claim, **characterized in that** the control element (210a-210h) is an actuator, such as a lighting fixture, a heater, an air conditioner, a fan, or multimedia equipment.

9. Control system according to any previous claim, **characterized in that** the control element (210a-210h) is a control panel or an access control terminal.

10. Node (220a-220h) for a control system, comprising an interface to a control element (210a-210h), a microcontroller (221), storage (222) for storing an ID of the node, and a transceiver (225) for communicating with a hub (230x-230z), wherein the node (220a) is arranged to transfer control data with a hub (230x) assigned for the node, wherein the node is arranged to transmit or receive its ID with at least one hub, and to join with a hub which informs it is assigned for the node, **characterized in that** the initial transmission/reception of the node ID for requesting joining with a hub is made after said assignment.

11. Node according to claim 10, **characterized in that** the node is arranged to verify a security certificate of the assigned hub in order to accept pairing with the assigned hub.

12. Hub (230x-230z) for a control system, comprising an interface (236) to a server (240), a processor (231), a storage (232) for storing identification data of a node, and a transceiver (235) for communicating with a node, wherein the hub is arranged to transfer control data with a node assigned for the hub, wherein the hub (230x) is arranged to receive from a server (240) identification data of those nodes (220a, 220b, 220d) that are assigned to the hub, to receive/transmit ID of nodes and to join with a node whose received ID is on the list of assigned nodes for the hub, **characterized in that** the initial receiving/transmitting ID of a node for requesting the joining is made after said assignment.

13. Hub according to claim 12, **characterized in that** the hub is arranged to receive from a server security certificates of the assigned nodes, and the hub is arranged to transmit the security certificate to an assigned node in the pairing process.

14. Pairing method (300) for a control system comprising at least one node with at least one control element and at least one hub, wherein in the method a hub and a node are assigned and paired to each other (350) and transfer control data with each other, wherein the hub communicates with a server of the system, and identification data is transferred to a hub of those nodes which are assigned to the hub (301), and identification data is exchanged between a hub and an assigned node (310-345) in order to join the hub and the node (350) in the control system, **characterized in that** the exchange of the identification data is based on a request of the hub or the assigned node, the initial request being made after said assignment.

15. Pairing method according to claim 14, **characterized in that** a security certificate of a node is transferred from the server to a hub assigned to the node, and in the pairing process between the node and the hub the security certificate is further transferred from the hub to the node, and the security certificate is verified by the node.

## Patentansprüche

1. Steuerungs- bzw. Regelungssystem, umfassend zumindest einen Knoten (220a-220h) mit einer Schnittstelle zu einem Steuerungs- bzw. Regelungselement (210a-210h), einem Mikrocontroller (221), einem Speicher (222) zum Speichern einer ID des Knotens und einer Sende-/Empfangseinrichtung (225) zum Kommunizieren mit einem Hub, zumindest einen Hub (230x-230z) mit einer Schnittstelle (236) zu einem Server, einem Prozessor (231), einem Speicher (232) zum Speichern von ID-Daten eines Knotens und einer Sende-/Empfangseinrichtung (235) zum Kommunizieren mit einem Knoten, wobei ein Hub und ein Knoten, die einander zugeordnet und miteinander zu einem Paar verbunden sind, eingerichtet sind, um Steuerungs- bzw. Regelungsdaten miteinander zu übertragen, wobei das Steuerungs- bzw. Regelungssystem einen Server (240) umfasst, und der Server eingerichtet ist, um an einen Hub (230x) Identifikationsdaten jener Knoten (220a, 220b, 220d) zu übertragen, die dem Hub zugeordnet sind, und ein Hub eingerichtet ist, um Identifikationsdaten mit einem zugeordneten Knoten auszutauschen zwecks Zusammenschlusses des Hubs und des Knotens im Steuerungs- bzw. Regelungssystem, **dadurch gekennzeichnet, dass** der Austausch der Identifikationsdaten auf einer Anfrage des Hubs oder des zugeordneten Knotens beruht, wobei die erste Anfrage nach der Zuordnung erfolgt.

2. Steuerungs- bzw. Regelungssystem nach Anspruch 1, **dadurch gekennzeichnet, dass** der Server eingerichtet ist, um an einen Hub Sicherheitszertifikate von Knoten zu senden, die dem Hub zugeordnet sind, und der Hub eingerichtet ist, um das Sicherheitszertifikat eines zugeordneten Knotens an den zugeordneten Knoten zwecks Verifizierung im Paarungsprozess zu senden.

3. Steuerungs- bzw. Regelungssystem nach Anspruch 1 oder 2, **dadurch gekennzeichnet, dass** die Sende-/Empfangseinrichtungen des Knotens und des Hubs Mittel zur drahtlosen Datenübertragung zwischen dem Knoten und dem Hub aufweisen.

4. Steuerungs- bzw. Regelungssystem nach einem der vorstehenden Ansprüche, **dadurch gekennzeichnet, dass** die Sende-/Empfangseinrichtungen des Knotens und des Hubs Mittel zur drahtgebundenen Datenübertragung zwischen dem Knoten und dem Hub aufweisen.

5. Steuerungs- bzw. Regelungssystem nach Anspruch 4, **dadurch gekennzeichnet, dass** die Sende-/Empfangseinrichtungen des Knotens und des Hubs Schnittstellen für ein drahtgebundenes Netzwerk, wie ein RS485-Netzwerk, aufweisen.

6. Steuerungs- bzw. Regelungssystem nach einem der vorstehenden Ansprüche, **dadurch gekennzeichnet, dass** der Hub und der Server Mittel (236, 246) zur gegenseitigen Kommunikation via das Internet aufweisen.

7. Steuerungs- bzw. Regelungssystem nach einem der vorstehenden Ansprüche, **dadurch gekennzeichnet, dass** das Steuerungs- bzw. Regelungselement (210a-210h) ein Sensor, wie ein Temperatursensor, ein Feuchtigkeitssensor, ein optischer Sensor, ein CO₂-Sensor, ein Bewegungssensor, eine andere Art von Anwesenheitssensor, oder eine Kamera ist.

8. Steuerungs- bzw. Regelungssystem nach einem der vorstehenden Ansprüche, **dadurch gekennzeichnet, dass** das Steuerungs- bzw. Regelungselement (210a-210h) ein Aktor, wie eine Leuchte, eine Heizvorrichtung, eine Klimavorrichtung, ein Lüfter oder ein Multimediagerät, ist.

9. Steuerungs- bzw. Regelungssystem nach einem der vorstehenden Ansprüche, **dadurch gekennzeichnet, dass** das Steuerungs- bzw. Regelungselement (210a-210h) ein Bedienfeld oder ein Zugangskontrollterminal ist.

10. Knoten (220a-220h) für ein Steuerungs- bzw. Regelungssystem, umfassend eine Schnittstelle zu einem Steuerungs- bzw. Regelungselement (210a-210h), einen Mikrocontroller (221), einen Speicher (222) zum Speichern einer ID des Knotens und eine Sende-/Empfangseinrichtung (225) zum Kommunizieren mit einem Hub (230x-230z), wobei der Knoten (220a) eingerichtet ist, um Steuerungs- bzw. Regelungsdaten mit einem dem Knoten zugeordneten Hub (230x) zu übertragen, wobei der Knoten eingerichtet ist, um seine ID mit zumindest einem Hub zu senden oder zu empfangen, und um sich mit einem Hub zusammenzuschließen, der mitteilt, dass er dem Knoten zugeordnet ist, **dadurch gekennzeichnet, dass** das erste Senden/Empfangen der Knoten-ID zwecks Anfrage nach einem Zusammenschluss mit einem Hub nach der Zuordnung erfolgt.

11. Knoten nach Anspruch 10, **dadurch gekennzeichnet, dass** der Knoten eingerichtet ist, um ein Sicherheitszertifikat des zugeordneten Hubs zu verifizieren zwecks Akzeptanz einer Paarung mit dem zugeordneten Hub.

12. Hub (230x-230z) für ein Steuerungs- bzw. Regelungssystem, umfassend eine Schnittstelle (236) zu einem Server (240), einen Prozessor (231), einen Speicher (232) zum Speichern von Identifikationsdaten eines Knotens und eine Sende-/Empfangseinrichtung (235) zum Kommunizieren mit einem Knoten, wobei der Hub eingerichtet ist, um Steuerungs- bzw. Regelungsdaten mit einem dem Hub zugeordneten Knoten zu übertragen, wobei der Hub (230x) eingerichtet ist, um aus einem Server (240) Identifikationsdaten jener Knoten (220a, 220b, 220d) zu empfangen, die dem Hub zugeordnet sind, ID von Knoten zu empfangen/senden und sich mit einem Knoten zusammenzuschließen, dessen empfangene ID sich auf der Liste zugeordneter Knoten für den Hub befinden, **dadurch gekennzeichnet, dass** das erste Empfangen/Senden von ID eines Knotens zwecks Anfrage nach dem Zusammenschluss nach der Zuordnung erfolgt.

13. Hub nach Anspruch 12, **dadurch gekennzeichnet, dass** der Hub eingerichtet ist, um aus einem Server Sicherheitszertifikate der zugeordneten Knoten zu empfangen, und der Hub eingerichtet ist, um das Sicherheitszertifikat an einen zugeordneten Knoten im Paarungsprozess zu senden.

14. Paarungsverfahren (300) für ein Steuerungs- bzw. Regelungssystem, umfassend zumindest einen Knoten mit zumindest einem Steuerungs- bzw. Regelungselement und zumindest einen Hub, wobei in dem Verfahren ein Hub und ein Knoten einander zugeordnet und miteinander zu einem Paar verbunden werden (350) und Steuerungs- bzw. Regelungsdaten miteinander übertragen, wobei der Hub mit einem Server des Systems kommuniziert, und an einen Hub Identifikationsdaten jener Knoten übertragen werden, die dem Hub zugeordnet sind (301), und Identifikationsdaten zwischen einem Hub und einem zugeordneten Knoten ausgetauscht werden (310-345) zwecks Zusammenschlusses des Hubs und des Knotens (350) im Steuerungs- bzw. Regelungssystem, **dadurch gekennzeichnet, dass** der Austausch der Identifikationsdaten auf einer Anfrage des Hubs oder des zugeordneten Knotens beruht, wobei die erste Anfrage nach der Zuordnung erfolgt.

15. Paarungsverfahren nach Anspruch 14, **dadurch gekennzeichnet, dass** ein Sicherheitszertifikat eines Knotens aus dem Server an einen dem Knoten zugeordneten Hub übertragen wird, und im Paarungsprozess zwischen dem Knoten und dem Hub das Sicherheitszertifikat weiterhin aus dem Hub an den Knoten übertragen wird, und das Sicherheitszertifikat vom Knoten verifiziert wird.

## Revendications

1. Système de commande comprenant au moins un noeud (220a - 220h) avec une interface vers un élément de commande (210a - 210h), un microcontrôleur (221), une mémoire de stockage (222) destinée à stocker un identifiant du noeud, et un émetteur-récepteur (225) destiné à communiquer avec un concentrateur, au moins un concentrateur (230x - 230z) avec une interface (236) vers un serveur, un processeur (231), une mémoire de stockage (232) destinée à stocker des données d'identifiant d'un noeud, et un émetteur-récepteur (235) destiné à communiquer avec un noeud, dans lequel un concentrateur et un noeud qui sont affectés et jumelés mutuellement, sont agencés de manière à se transférer mutuellement des données de commande, dans lequel le système de commande comprend un serveur (240), et le serveur est agencé de manière à transférer, à un concentrateur (230x), des données d'identification de ces noeuds (220a, 220b, 220d) qui sont affectés au concentrateur, et un concentrateur est agencé de manière à échanger des données d'identification avec un noeud affecté afin de rejoindre le concentrateur et le noeud dans le système de commande, **caractérisé en ce que** l'échange des données d'identification est basé sur une demande du concentrateur ou du noeud affecté, la demande initiale étant mise en oeuvre subséquemment à ladite affectation.

2. Système de commande selon la revendication 1, **caractérisé en ce que** le serveur est agencé de manière à transmettre, à un concentrateur, des certificats de sécurité de noeuds qui sont affectés au concentrateur, et le concentrateur est agencé de manière à transmettre le certificat de sécurité d'un noeud affecté, au noeud affecté, à des fins de vérification dans le processus de jumelage.

3. Système de commande selon la revendication 1 ou 2, **caractérisé en ce que** les émetteurs-récepteurs du noeud et du concentrateur comportent des moyens de transfert de données sans fil entre le noeud et le concentrateur.

4. Système de commande selon l'une quelconque des revendications précédentes, **caractérisé en ce que** les émetteurs-récepteurs du noeud et du concentrateur comportent des moyens de transfert de données filaire entre le noeud et le concentrateur.

5. Système de commande selon la revendication 4, **caractérisé en ce que** les émetteurs-récepteurs du noeud et du concentrateur présentent des interfaces pour un réseau filaire, par exemple un réseau RS485.

6. Système de commande selon l'une quelconque des revendications précédentes, **caractérisé en ce que** le concentrateur et le serveur présentent des moyens (236, 246) permettant une communication mutuelle par l'intermédiaire d'Internet.

7. Système de commande selon l'une quelconque des revendications précédentes, **caractérisé en ce que** l'élément de commande (210a - 210h) est un capteur, par exemple un capteur de température, un capteur d'humidité, un capteur optique, un capteur de CO₂, un capteur de mouvement, un autre type de capteur de présence, ou un appareil photographique.

8. Système de commande selon l'une quelconque des revendications précédentes, **caractérisé en ce que** l'élément de commande (210a - 210h) est un système actif, par exemple un appareil d'éclairage, un chauffe-eau, un climatiseur, un ventilateur, ou un équipement multimédia.

9. Système de commande selon l'une quelconque des revendications précédentes, **caractérisé en ce que** l'élément de commande (210a - 210h) est un panneau de commande ou une borne de commande d'accès.

10. Noeud (220a - 220h) pour un système de commande, comprenant une interface vers un élément de commande (210a - 210h), un microcontrôleur (221), une mémoire de stockage (222) destinée à stocker un identifiant du noeud, et un émetteur-récepteur (225) destiné à communiquer avec un concentrateur (230x - 230z), dans lequel le noeud (220a) est agencé de manière à transférer des données de commande avec un concentrateur (230x) affecté pour le noeud, dans lequel le noeud est agencé de manière à transmettre ou recevoir son identifiant vers ou à partir d'au moins un concentrateur, et de rejoindre un concentrateur qui signale qu'il est affecté pour le noeud, **caractérisé en ce que** la transmission / réception initiale de l'identifiant de noeud visant à demander le rattachement à un concentrateur est mise en oeuvre subséquemment à ladite affectation.

11. Noeud selon la revendication 10, **caractérisé en ce que** le noeud est agencé de manière à vérifier un certificat de sécurité du concentrateur affecté afin d'accepter un jumelage avec le concentrateur affecté.

12. Concentrateur (230x - 230z) pour un système de commande, comprenant une interface (236) vers un serveur (240), un processeur (231), une mémoire de stockage (232) destinée à stocker des données d'identification d'un noeud, et un émetteur-récepteur (235) destiné à communiquer avec un noeud, dans lequel le concentrateur est agencé de manière à transférer des données de commande avec un noeud affecté pour le concentrateur, dans lequel le concentrateur (230x) est agencé de manière à recevoir, en provenance d'un serveur (240), des données d'identification de ces noeuds (220a, 220b, 220d) qui sont affectés au concentrateur, à recevoir / transmettre l'identifiant de noeuds, et à rejoindre un noeud dont l'identifiant reçu est sur la liste de noeuds affectés pour le concentrateur, **caractérisé en ce que** la transmission/réception initiale de l'identifiant d'un noeud visant à demander le rattachement est mise en oeuvre subséquemment à ladite affectation.

13. Concentrateur selon la revendication 12, **caractérisé en ce que** le concentrateur est agencé de manière à recevoir, en provenance d'un serveur, des certificats de sécurité des noeuds affectés, et le concentrateur est agencé de manière à transmettre le certificat de sécurité à un noeud affecté dans le processus de jumelage.

14. Procédé de jumelage (300) pour un système de commande comprenant au moins un noeud avec au moins un élément de commande et au moins un concentrateur, dans lequel, dans le procédé, un concentrateur et un noeud sont affectés et jumelés mutuellement (350) et se transfèrent mutuellement des données de commande, dans lequel le concentrateur communique avec un serveur du système, et des données d'identification sont transférées à un concentrateur de ces noeuds qui sont affectés au concentrateur (301), et des données d'identification sont échangées entre un concentrateur et un noeud affecté (310 - 345) afin de rejoindre le concentrateur et le noeud (350) dans le système de commande, **caractérisé en ce que** l'échange des données d'identification est basé sur une demande du concentrateur ou du noeud affecté, la demande initiale étant mise en oeuvre subséquemment à ladite affectation.

15. Procédé de jumelage selon la revendication 14, **caractérisé en ce qu'**un certificat de sécurité d'un noeud est transféré du serveur à un concentrateur affecté au noeud, et dans le processus de jumelage entre le noeud et le concentrateur, le certificat de sécurité est en outre transféré du concentrateur au noeud, et le certificat de sécurité est vérifié par le noeud.
